# EUROPÄISCHE PATENTSCHRIFT

(11) **EP 2 917 079 B1**
(45) Veröffentlichungstag und Bekanntmachung des Hinweises auf die Patenterteilung: **11.07.2018**
(21) Anmeldenummer: 13760039.1
(22) Anmeldetag: 10.09.2013
(51) Int. Cl.: B60T 7/22

(54) **BREMSVORRICHTUNG FÜR EIN KRAFTFAHRZEUG MIT PRÄPARIERENDER VORVERZÖGERUNG UND VERFAHREN ZUM STEUERN EINER SOLCHEN BREMSVORRICHTUNG**
BRAKE DEVICE FOR A MOTOR VEHICLE WITH PREPARATORY PRE-DECELERATION, AND METHOD FOR CONTROLLING A BRAKE DEVICE OF SAID TYPE
DISPOSITIF DE FREINAGE POUR UN VÉHICULE À MOTEUR, COMPORTANT UN RALENTISSEMENT PRÉALABLE PRÉPARATOIRE, ET PROCÉDÉ PERMETTANT DE COMMANDER UN TEL DISPOSITIF DE FREINAGE

(30) Priorität: 08.11.2012 DE 102012220361
(43) Veröffentlichungstag der Anmeldung: 16.09.2015
(73) Patentinhaber: Robert Bosch GmbH, 70442 Stuttgart (DE)
(72) Erfinder: SCHUBERT, Michael, 75382 Althengstett (DE); MICHI, Harald, 75248 Oelbronn-Duerrn (DE); BACHMANN, Michael, 71287 Weissach (DE); KORTHALS, Christian, 74321 Bietigheim-Bissingen (DE)
(86) Internationale Anmeldenummer: PCT/EP2013/068653
(87) Internationale Veröffentlichungsnummer: WO 2014/072098

(56) Entgegenhaltungen:
- DE-A1- 10 322 554
- DE-A1- 10 325 266
- DE-A1-102009 058 154
- DE-A1-102011 003 494
- US-A1- 2002 107 629

## Beschreibung

### Gebiet der Erfindung

Die vorliegende Erfindung betrifft eine Bremsvorrichtung für ein Kraftfahrzeug sowie ein Verfahren zum Steuern einer solchen Bremsvorrichtung, insbesondere in Kooperation mit einem Abstandsregeltempomat.

### Stand der Technik

Bremsvorrichtungen in Kraftfahrzeugen dienen dazu, das Kraftfahrzeug im Rahmen eines Bremsvorgangs gezielt zu verzögern, d.h. die Geschwindigkeit des Fahrzeugs zu verringern bzw. eine durch äußere Einflüsse wie beispielsweise bei einer Bergabfahrt bewirkte Geschwindigkeitszunahme des Fahrzeugs zu verringern. Eine Bremsvorrichtung kann hierzu über Bremsen verfügen, die mit den Rädern des Kraftfahrzeugs gekoppelt sind und die beispielsweise durch Anpressen eines Bremsbelags an eine Bremsscheibe ein Bremsmoment auf ein zugehöriges Rad bewirken. Alternativ zu einem hydraulischen Anpressen eines Bremsbelags kann eine Bremsvorrichtung auch über Bremsen in Form anderer Verzögerungsmechanismen verfügen wie z.B. einen mit einem oder mehreren Räder gekoppelten elektrischen Generator, der ein Schleppmoment auf das Rad bzw. die Räder ausüben kann, oder eine Wirbelstrombremse. In der Regel ist jedes der Räder des Kraftfahrzeugs mit einer zugehörigen Bremse ausgestattet. Die Bremsen können dabei in Reaktion auf eine beispielsweise von einem Fahrer über ein Bremspedal bewirkte Bremsanforderung ein verzögerndes Bremsmoment auf die Räder des Kraftfahrzeugs bewirken.

In modernen Kraftfahrzeugen verfügt eine Bremsvorrichtung zusätzlich zu den Bremsen über eine Steuerung beziehungsweise Regelung, um die von den mehreren Bremsen des Kraftfahrzeugs zu bewirkenden Bremsmomente gemäß einer Sollvorgabe zu steuern beziehungsweise zu regeln. Hierdurch können beispielsweise die für eine optimale Gesamtverzögerung des Kraftfahrzeugs erforderlichen Bremsmomente für die einzelnen Räder individuell gesteuert beziehungsweise geregelt werden.

Ergänzend können beispielsweise Fahrerassistenzsysteme wie zum Beispiel ein Abstandsregeltempomat während ihres Betriebs zielgerichtet Sollvorgaben für eine zu bewirkende Fahrzeugverzögerung ermitteln und an eine Steuerung beziehungsweise Regelung einer Bremsvorrichtung übermitteln, um zum Beispiel unabhängig von einer von einem Fahrer bewirkten Bremsanforderung das Fahrzeug abzubremsen, beispielsweise wenn es einem vorausfahrenden Fahrzeug zu nahe zu kommen droht.

Bremsansteuerungen längsdynamischer Funktionen in einem Fahrerassistenzsystem basieren im Allgemeinen auf einer sollvorgabegeführten Verzögerungsregelung. Dabei wird erst dann eine Bremse des Kraftfahrzeugs angesteuert, wenn sich eine signifikante Abweichung zwischen einem Sollwert und einem Istwert eingestellt hat. Andererseits wird bei einem entsprechenden Verlauf von Reglereingangsgrößen das Bremsmoment bis auf Null reduziert und dabei die Bremse vollständig gelöst, ohne weitere die Fahrsituation beschreibende Indikatoren zu berücksichtigen.

Statt einer Regelung der Verzögerung kann auch eine Steuerung der Verzögerung eingesetzt werden, bei der ein von den Bremsen zu bewirkendes Bremsmoment, ausgelöst beispielsweise durch einen Trigger bei Eintreten einer Notbremssituation, auf einen festen Vorgabewert gesetzt wird.

Im Bereich von Fahrerassistenzsystemen existieren typischerweise Priorisierungsregeln, die einer Einflussnahme des Fahrers stets Vorrang einräumen. Eine solche Priorisierung einer von dem Fahrer ausgeübten Einflussnahme führt beispielsweise regelmäßig zu einem Abbruch einer von einem Fahrerassistenzsystem bewirkten aktiven Abbremsung des Fahrzeugs im Rahmen einer autonomen Längsregelung, die im Anschluss an die Fahrerintervention wieder aufgenommen werden muss.

Es wurde beobachtet, dass insbesondere bei Bremsvorrichtungen, die einerseits beispielsweise zum Ermöglichen einer Einflussnahme durch ein Fahrerassistenzsystem eine sollvorgabegeführte Verzögerungsregelung bzw. Verzögerungssteuerung aufweisen und die andererseits einer Einflussnahme durch den Fahrer stets eine Priorisierung einräumen, bestimmte Probleme auftreten können. Beispielsweise kann es in manchen Fahrsituationen zu einem verzögerten Bewirken eines sollvorgabegeführte Bremsmomentes kommen und / oder es können beispielsweise vom Fahrer als störend wahrgenommene Geräusche auftreten, die zum Beispiel vom Aufbau eines notwendigen Bremsdrucks für eine hydraulische Bremse herrühren können.

US 2002/0107629 A1 beschreibt ein Verfahren und System zum Steuern eines Stand-by-Bremsmoments in einem Kraftfahrzeug gemäß dem Oberbegriff der unabhängigen Ansprüche 6 und 1.

### Offenbarung der Erfindung

Es wird eine Bremsvorrichtung und ein Verfahren zum Ansteuern einer solchen Bremsvorrichtung für ein Kraftfahrzeug gemäß den unabhängigen Ansprüchen 1 und 6 vorgeschlagen, die unter anderem die oben genannten Probleme herkömmlicher Bremsvorrichtungen vermeiden oder zumindest reduzieren können.

Gemäß einem ersten Aspekt der Erfindung wird eine Bremsvorrichtung für ein Kraftfahrzeug vorgeschlagen, welche eine sollvorgabegeführte Verzögerungseinrichtung aufweist, die bei Empfang einer von einem Fahrer oder einem Assistenzsystem bewirkten Bremsanforderung basierend auf einer Differenz zwischen einem Sollwert und einem Istwert oder basierend lediglich auf einem vorgegebenen Sollwert eine Bremse dazu ansteuert, ein sollvorgabegeführtes Bremsmoment für eine sollwertorientierte Verzögerung des Kraftfahrzeugs zu bewirken. Die Bremsvorrichtung zeichnet sich dadurch aus, dass sie zusätzlich zu der sollvorgabegeführten Verzögerungseinrichtung eine so genannte Bremspräparierungssteuerung aufweist, welche bei Empfang eines Bremspräparierungssignals die Bremse unabhängig von dem Sollwert dazu ansteuert, mindestens ein Präparierungsbremsmoment für eine signifikante Vorverzögerung des Kraftfahrzeugs zu bewirken.

Gemäß einem zweiten Aspekt der Erfindung wird ein Verfahren zum Ansteuern einer solchen Bremsvorrichtung vorgeschlagen, bei dem ein Bremspräparierungssignal erzeugt wird, sobald eine Fahrsituation ermittelt wird, die eine baldige von einem Fahrer oder einem Assistenzsystem bewirkte Bremsanforderung mit hoher Wahrscheinlichkeit erwarten lässt, wobei das Bremspräparierungssignal anschließend an die Bremspräparierungssteuerung der Bremsvorrichtung übermittelt wird.

Die Bremsvorrichtung gemäß dem ersten Aspekt der Erfindung sowie das Verfahren zu deren Ansteuerung gemäß dem zweiten Aspekt der Erfindung können als unter anderem auf den folgenden Erkenntnissen und Ideen beruhend angesehen werden:
Bei den einleitend beschriebenen Mechanismen herkömmlicher Bremsvorrichtungen, bei denen einerseits eine sollvorgabegeführte Verzögerungseinrichtung, welche beispielsweise in Form einer sollvorgabegeführten Verzögerungsregelung oder einer sollvorgabegeführten Verzögerungssteuerung ausgebildet sein kann, beispielsweise aufgrund einer Anforderung von einem Assistenzsystem für eine Ansteuerung einer Bremse sorgt und andererseits eine Priorisierung einer Einflussnahme durch den Fahrer dafür sorgen kann, dass eine derart eingeleitete Abbremsung im Rahmen einer autonomen Längsregelung abgebrochen beziehungsweise temporär unterbrochen wird, kann es dazu kommen, dass beispielsweise unter der ungünstigen Anfangsbedingung einer vollständig gelösten Bremse ein rascher Verzögerungsaufbau erfolgen soll. Dies kann unter anderem in Fahrsituationen geschehen, in denen bereits im Vorfeld, zum Beispiel bereits beim Lösen der Bremse, eine Notwendigkeit einer nachfolgenden erneuten Bremsaktivierung mit hoher Wahrscheinlichkeit ableitbar war, beispielsweise mithilfe geeigneter situationserkennender Logiken.

Es wird nun vorgeschlagen, eine beispielsweise situationsabhängig variierbare präparative Ansteuerung einer Bremsanlage zur Verfügung zu stellen, die insbesondere im Vorfeld einer erwarteten Verzögerungsregelung oder Fahrerbremsung ein angepasstes Bremsmoment bewirkt und / oder eine erweiterte Bremsbereitschaft herstellt.

Hierzu wird die Bremsvorrichtung mit einer so genannten Bremspräparierungssteuerung versehen, die, wenn sie ein so genanntes Bremspräparierungssignal empfängt, die Bremse unabhängig von dem durch den Fahrer oder das Assistenzsystem vorgegebenen Sollwert dazu ansteuert, zumindest ein vorgegebenes Mindestbremsmoment, hierin als Präparierungsbremsmoment bezeichnet, für eine Vorverzögerung des Kraftfahrzeugs zu bewirken.

Mit anderen Worten soll die Bremspräparierungssteuerung die Bremse derart ansteuern, dass diese selbst dann, wenn von dem Fahrer oder dem Assistenzsystem aktuell keine Bremswirkung angefordert wird, eine gewisse Verzögerung des Kraftfahrzeugs über ein geringfügiges Betätigen der Bremse bewirken kann. Diese geringfügige Verzögerung wird hierin als Vorverzögerung bezeichnet und soll eine signifikante Stärke haben, das heißt, die Vorverzögerung soll das Kraftfahrzeug tatsächlich zumindest geringfügig messbar abbremsen. Beispielsweise kann die Vorverzögerung mindestens 0,1 m/s², vorzugsweise mindestens 0,3 m/s² und stärker bevorzugt mindestens 0,5 m/s² betragen. Zumindest soll die Vorverzögerung ausreichend signifikant stark sein, dass sie sich messbar von anderen Verzögerungen unterscheidet, wie sie unabhängig von den Bremsen beispielsweise durch Schleppmomente, Gegenwind, unterschiedliche Fahrbahnbeschaffenheiten, etc. auf das Kraftfahrzeug auswirken können.

Die Bewirkung des Präparierungsbremsmomentes kann dabei in der Bremsvorrichtung durch den Empfang eines Bremspräparierungssignals ausgelöst werden, wobei dieses Bremspräparierungssignal beispielsweise erzeugt wird, sobald eine Fahrsituation erkannt wird, bei der davon ausgegangen werden kann, dass in nächster Zukunft, das heißt beispielsweise in den nächsten Sekunden oder Sekundenbruchteilen mit einer hohen Wahrscheinlichkeit von beispielsweise mehr als 50%, vorzugsweise mehr als 90% mit einer erneuten Bremsanforderung zu rechnen ist.

Eine geeignete Fahrsituationserkennung kann dabei beispielsweise von einer Steuerung eines Abstandsregeltempomats durchgeführt werden. Ein solcher Abstandsregeltempomat wird teilweise auch als ACC (adaptive cruise control) bezeichnet. Alternativ kann eine Fahrsituationserkennung auch mithilfe eines Videosystems oder durch Auswertung der Betätigung eines Gaspedals, eines Bremspedals und / oder einer Lenkung durch den Fahrer durchgeführt werden.

Das Bremspräparierungssignal kann ein einfaches binäres Signal sein, welches nur angibt, ob innerhalb eines vorbestimmten zukünftigen Zeitintervalls mit ausreichend hoher Wahrscheinlichkeit mit einer erneuten Bremsanforderung zu rechnen ist oder nicht.

Alternativ können verschiedene Arten von Bremspräparierungssignalen erzeugt werden, abhängig von der Wahrscheinlichkeit einer baldig von einem Fahrer oder von einem Assistenzsystem bewirkten Bremsanforderung und / oder einer Kritikalität einer aktuellen Fahrsituation.

Wird im Rahmen einer Fahrsituationserkennung ein Bremspräparierungssignal erzeugt, erfolgt eine von der von einem Fahrer oder einem Assistenzsystem im Zusammenhang mit einer Bremsanforderung vorgegebenen längsdynamischen Zielgröße unabhängige Anforderung an einen Bremsregler, ein Bremsmoment zum Beispiel über eine Vorbefüllungsfunktion für eine hydraulische Bremse neu aufzubauen oder alternativ ein bereits vorliegendes Bremsmoment nicht vollständig abzubauen.

Mit anderen Worten soll, wenn vorangehend kein sollvorgabegeführtes Bremsmoment erzeugt worden ist, die Bremspräparierungssteuerung bei Empfang des Bremspräparierungssignals die Bremse dazu ansteuern, das von der Bremse bewirkte Bremsmoment bis auf ein vorbestimmtes Präparierungsbremsmoment zu steigern.

Wenn bereits vorangehend ein sollvorgabegeführtes Bremsmoment erzeugt wurde, soll die Bremspräparierungssteuerung erfindungsgemäß bei Empfang des Bremspräparierungssignals die Bremse dazu ansteuern, das vorangehend erzeugte sollvorgabegeführte Bremsmoment nicht bis auf Null sondern lediglich auf ein minimal aufrecht zu erhaltendes Präparierungsbremsmoment abzusenken.

Wenn eine Fahrsituationserkennungseinrichtung dazu ausgelegt ist, verschiedene Arten von Bremspräparierungssignalen abhängig von der Wahrscheinlichkeit einer zukünftigen Bremsanforderung und / oder der Kritikalität einer Fahrsituation zu erzeugen, kann entsprechend die Bremspräparierungssteuerung dazu ausgelegt sein, diese verschiedenen Arten von Bremspräparierungssignalen zu empfangen und abhängig von dem empfangenen Bremspräparierungssignal die Bremse dazu anzusteuern, ein bremspräparierungssignal-spezifisches Präparierungsbremsmoment für eine Vorverzögerung des Kraftfahrzeugs zu bewirken.

Das Bremspräparierungssignal-spezifische Präparierungsbremsmoment kann dabei für jedes der möglichen Bremspräparierungssignale derart geeignet gewählt sein, dass die Bremse beispielsweise zur Erzeugung eines bestimmten Bremsmomentes und mit einem bestimmten Bremsmomentprofil angesteuert wird. Beispielsweise kann ein umso höheres Bremsmoment erzeugt werden, je größer die Kritikalität der aktuellen Fahrsituation ist. Andererseits kann ein umso geringeres Präparationsbremsmoment erzeugt werden, je geringer die Wahrscheinlichkeit ist, dass in naher Zukunft eine Bremsanforderung von einem Fahrer oder einem Assistenzsystem bewirkt wird.

Auf diese Weise kann beispielsweise erreicht werden, dass einerseits in Fahrsituationen, die erkennbar kritisch sind, bereits rechtzeitig eine Voraktivierung der Bremse bewirkt wird und damit die eigentliche Aktivierung bei Vorliegen der erwarteten Bremsanforderung mit größerer Geschwindigkeit und größerer Genauigkeit durchgeführt werden kann.

Andererseits kann für den Fall, dass eine zukünftige Bremsanforderung nur mit verhältnismäßig geringer Wahrscheinlichkeit zu erwarten ist, lediglich eine schwache Voraktivierung der Bremse durchgeführt werden, um den Fahrer durch eine damit einhergehende Vorverzögerung des Kraftfahrzeugs nicht unnötig zu stören.

Bei der Ermittlung der Fahrsituation kann es vorteilhaft sein, zumindest eine Geschwindigkeit oder Beschleunigung des Kraftfahrzeugs, einen Abstand zu einem vorausfahrenden Fahrzeug, eine Geschwindigkeit oder Beschleunigung des vorausfahrenden Fahrzeugs und eine Gaspedalbetätigung des Fahrers zu berücksichtigen. Hierdurch kann zum Beispiel erkannt werden, wenn ein vorausfahrendes Fahrzeug beschleunigt und die Erzeugung eines Präparierungsbremsmoments beispielsweise für eine Weiterführung einer ACC-Regelung ungünstig erscheint. In einem solchen Fall sollte dann kein Bremspräparierungssignal erzeugt werden beziehungsweise ein solches zurückgenommen werden.

Je nach dem, welche Sensoren in einer Fahrsituationserkennungsvorrichtung wie beispielsweise einer ACC-Regelung verfügbar sind, können weitere Signale bei der Ermittlung der Fahrsituation ergänzend erfasst werden und darauf basierend beurteilt werden, ob ein Bremspräparierungssignal erzeugt werden soll oder nicht. Beispielsweise kann eine seitliche Position des vorausfahrenden Fahrzeugs in Bezug auf das eigene Fahrzeug, ein Lenkwinkel des eigenen Fahrzeugs und / oder eine Umfeldsituation wie beispielsweise eine vorausliegende Ampel, weiter vorausfahrende Fahrzeuge und deren Bewegung etc. berücksichtigt werden.

Die Bremspräparierungssteuerung kann insbesondere dazu ausgelegt sein, die Bremse in Reaktion auf einen Empfang eines Bremspräparierungssignals derart anzusteuern, dass das Präparierungsbremsmoment mit einer im Vergleich zu einem sollvorgabegeführten Bremsmoment verringerten Geräuschentwicklung bewirkt wird.

Hierzu kann beispielsweise eine Pumpe, die in einem hydraulischen Bremssystem einen benötigten Bremsdruck erzeugt, langsamer und damit mit einem geringeren Geräuschniveau betrieben werden.

Da im Gegensatz zu einem sollvorgabegeführten Bremsmoment, das in der Regel sehr schnell in einer aktuellen eine Bremsung erfordernden Situation erzeugt werden muss, die Erzeugung eines Präparierungsbremsmoments wesentlich langsamer durchgeführt werden kann und somit mit geringerer Geräuschentwicklung durch hierfür verwendete Pumpen oder ähnlichem, kann mithilfe der hier vorgeschlagenen Bremspräparierungssteuerung in einer Bremsvorrichtung die gesamte Geräuschentwicklung während eines Bremsvorgangs drastisch verringert werden und somit eine störende Beeinflussung des Fahrers vermieden werden.

Mithilfe von Ausführungsformen der hier vorgeschlagenen Bremsvorrichtung beziehungsweise eines Verfahrens zum Ansteuern einer solchen Bremsvorrichtung können unter anderem die nachfolgend beschriebenen Vorteile erreicht werden:
Durch einen gleichmäßigeren Verzögerungsverlauf und weniger Geräuschentwicklung, insbesondere aufgrund eines verringerten Volumenbedarfs bei einer hydraulischen Bremse, bei einer nachfolgenden Bremsung kann ein Fahrkomfort erhöht werden.

Aufgrund des vorab bewirkten Präparierungsbremsmoments kann bei einer nachfolgend angeforderten Abbremsung des Fahrzeugs eine Verzögerungsaufbaudynamik erhöht und Verzugszeiten minimiert werden. Hierdurch kann eine verbesserte Präzision der Bremsregelung erreicht werden.

Wenn während einer von einem Fahrerassistenzsystem assistierten Fahrt kurzzeitig von einem Fahrer ein Eingriff in die Fahrzeugsteuerung vorgenommen wird und dieser Fahrereingriff höher priorisiert wird als die Steuerung des Assistenzsystems, aber die Fahrsituationserkennungseinrichtung erkennt, dass dieser Fahrereingriff mit hoher Wahrscheinlichkeit zeitlich kurz begrenzt ist und nachfolgend eine situationsangepasste Fahrzeugverzögerung fortgeführt werden soll, kann nach Beendigung des Fahrereingriffs das bereits während des Fahrereingriffs unterlagerte leichte Präparierungsbremsmoment sofort verzögernd wirken.

Wenn beispielsweise ein Fahrer während einer von einem ACC-System assistierten Fahrt eine von dem ACC-System angeforderte Abbremsung des Fahrzeugs kurzzeitig durch Betätigen des Gaspedals "übertritt" und somit die Abbremsung unterbricht, kann das ACC-System beziehungsweise eine zugehörige Fahrsituationserkennungseinrichtung bereits abschätzen, dass dieses "Übertreten" nur einen kurzfristigen Fahrereingriff darstellt und dass danach ein Abbremsen des Fahrzeugs gesteuert von dem ACC-System fortgeführt werden soll. Es kann daraufhin ein geeignetes Bremspräparierungssignal erzeugt werden, aufgrund dessen die Bremspräparierungssteuerung dann die Bremse zur Erzeugung einer signifikanten Vorverzögerung ansteuert. Die Bremse ist somit bereits während des "Übertretens" durch den Fahrer zumindest geringfügig aktiviert, so dass nach Beendigung dieses "Übertretens" sofort eine Verzögerungswirkung auf das Kraftfahrzeug bereit steht und nicht beispielsweise ein hydraulisches System erst wieder unter Druck gesetzt werden muss, um eine solche Verzögerung zu erreichen.

Es kann ein bestmöglicher Bereitschaftszustand der Bremsanlage hergestellt werden durch Aufbau eines angepassten, gegebenenfalls erhöhten Aktivierungsniveaus zur Vorbereitung auf eine bevorstehende Einleitung oder Weiterführung einer Verzögerungsregelung oder einer zu erwartenden Bremsung durch den Fahrer. Beispielsweise kann bei einer hydraulischen Bremsanlage durch geeignete Wahl eines erhöhten, über das bloße Anlegen der Bremsbeläge hinaus gehenden Vorbefüllungsniveaus die Eigenschaft mit dem Druckniveau zunehmender Kreissteifigkeit genutzt werden, um nachfolgend schneller und / oder mit weniger Geräuschentwicklung Bremskraft aufbauen zu können.

Durch eine Ausnutzung eines vorangehenden Bremsmoments aus einer vorhergehenden Bremsung des Kraftfahrzeugs lassen sich Aktuatorik der Stellglieder und damit Geräusch und Ruck während einer nachfolgenden Abbremsung minimieren. Im Falle einer hydraulischen Bremsanlage kann beispielsweise ein definierter Restwert des Bremsdrucks durch bloße Ventilbestromung "eingesperrt" werden, ohne eine Pumpe aktivieren zu müssen. Hierdurch kann unter anderem die Laufzeitbelastung der Pumpe gesenkt werden.

Es wird darauf hingewiesen, dass mögliche Merkmale und Vorteile von Ausführungsformen der Erfindung hierin teilweise mit Bezug auf eine erfindungsgemäße Bremsvorrichtung, teilweise mit Bezug auf ein erfindungsgemäßes Verfahren zum Ansteuern einer Bremsvorrichtung und teilweise mit Bezug auf ein geeignetes Steuergerät zur Durchführung eines solchen Verfahrens beschrieben sind. Ein Fachmann wird erkennen, dass die beschriebenen Merkmale in geeigneter Weise kombiniert oder ausgetauscht werden können, um zu weiteren Ausführungsformen der Erfindung und gegebenenfalls Synergieeffekten gelangen zu können.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Figur 1 zeigt ein Kraftfahrzeug mit einer Bremsvorrichtung gemäß einer Ausführungsform der vorliegenden Erfindung.
Figuren 2 und 3 veranschaulichen Beispiele eines Verlaufs eines Bremsdruckes zur Erzeugung eines Bremsmoments, wie es mit einer Bremsvorrichtung gemäß einer Ausführungsform der vorliegenden Erfindung erzeugt werden kann.

Die Figuren sind lediglich schematisch und nicht maßstabsgetreu.

### Ausführungsformen der Erfindung

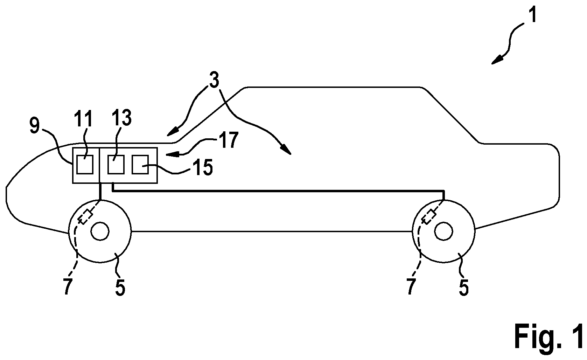

Figur 1 zeigt ein Kraftfahrzeug 1, welches mit einer Bremsvorrichtung 3 gemäß einer Ausführungsform der vorliegenden Erfindung ausgestattet ist.

Die Bremsvorrichtung 3 weist ein Steuergerät 17 sowie mehrere Bremsen 7, die mit jeweils einem der Räder 5 des Kraftfahrzeugs 1 zusammenwirken, auf. In dem Steuergerät 17 ist sowohl eine sollvorgabegeführte Verzögerungsregelung 13 als auch eine Bremspräparierungsteuerung 15 vorgesehen. Ferner ist eine Fahrsituationserkennungseinrichtung 11 vorgesehen, die im dargestellten Beispiel Teil einer Regelung 9 eines Abstandsregeltempomaten (ACC) ist. Innerhalb des Steuergeräts 17 sind geeignete Schnittstellen (nicht dargestellt) vorgesehen, um Signale zwischen den einzelnen Komponenten 9, 11, 13, 15 auszutauschen.

Es wird darauf hingewiesen, dass in Figur 1 ein gemeinsames Steuergerät für die Bremsvorrichtung und den ACC dargestellt ist, in modernen Fahrzeugen zur Implementierung der erfindungsgemäßen Bremsvorrichtung jedoch alternativ getrennte Steuergeräte mit externen Signalen für Sollverzögerung und Bremsenpräparierung eingesetzt werden können.

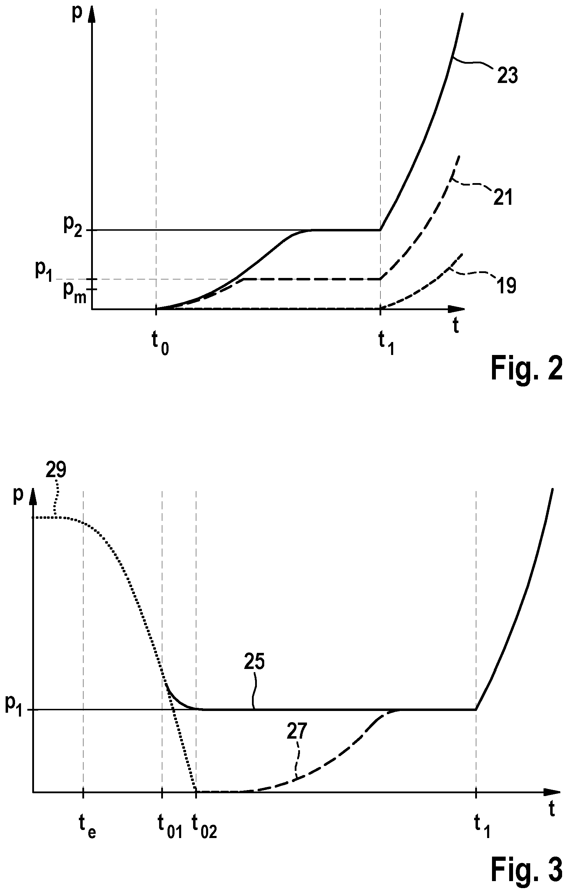

In den Figuren 2 und 3 sind zeitliche Verläufe von Bremsdrücken p zur Erzeugung eines Bremsmoments M, wie es mit einer Bremsvorrichtung 3 gemäß einer Ausführungsform der vorliegenden Erfindung erzeugt werden kann, dargestellt. Ein Bremsdruck p kann hierbei beispielsweise in einem hydraulischen Bremssystem wirken und dabei ein zugehöriges Bremsmoment M auf das Fahrzeug bewirken. Alternativ kann das zu bewirkende Bremsmoment M jedoch auch mithilfe anderer, beispielsweise nicht-hydraulischer Bremssysteme erzeugt werden, beispielsweise durch eine im Generatormodus betriebene Elektromaschine eines Elektro- oder Hybridfahrzeugs.

In Figur 2 gibt die Kurve 19 den Verlauf eines Bremsdruckes p wieder, wie er bei einer herkömmlichen Bremsvorrichtung typischerweise erzeugt wird. Wenn zum Zeitpunkt t₁ von einem Fahrer oder von einem Assistenzsystem eine Bremsanforderung in der Bremsvorrichtung bewirkt wird, steigt der in der Bremsvorrichtung erzeugte Druck p kontinuierlich an. Da hierbei im Fall von beispielsweise hydraulischen Bremsen zunächst ein gewisser Druck in der Hydraulik erzeugt werden muss, um ein Spiel zwischen den Bremsbelägen und der Bremsscheibe zu überwinden, um dann einen Druck von den Bremsbelägen auf die Bremsscheiben bewirken zu können, vergeht eine gewisse Zeitdauer, bis die eigentlich das Kraftfahrzeug bremsende Verzögerung einsetzt, das heißt, bis der Bremsdruck p ein für eine signifikante Verzögerung notwendiges Mindestmaß pₘ erreicht.

Die Kurven 21 und 23 in Figur 2 veranschaulichen Bremsdrücke, wie sie in einer erfindungsgemäßen Bremsvorrichtung erzeugt werden können.

Zu einem Zeitpunkt t₀ erkennt eine Fahrsituationserkennungseinrichtung, dass eine Fahrsituation vorliegt, bei der mit hoher Wahrscheinlichkeit innerhalb eines kurzen zukünftigen Zeitraums eine Bremsanforderung von einem Fahrer oder einem Assistenzsystem zu erwarten ist. Die Fahrsituationserkennungseinrichtung gibt daraufhin ein Bremspräparierungssignal aus. In Reaktion auf dieses Bremspräparierungssignal steuert die Bremspräparierungssteuerung der Bremsvorrichtung die Bremsen derart an, dass zumindest ein bestimmter minimaler Präparierungsbremsdruck p₁, wie in der Kurve 21 dargestellt, oder alternativ ein erhöhter Präparierungsbremsdruck p₂, wie in der Kurve 23 dargestellt, erreicht wird.

Die Stärke und der Verlauf des Aufbaus dieses Präparierungsbremsdruckes kann dabei abhängig von der Wahrscheinlichkeit, mit der die Bremsanforderung zu erwarten ist, und / oder abhängig von der Kritikalität der aktuellen Fahrsituation gewählt werden. Vorzugsweise wird der Präparierungsbremsdruck p₁, p₂ jedoch langsamer aufgebaut, als dies für die Erzeugung eines sollvorgabegeführten Bremsmomentes notwendig wäre, so dass eine hierfür eingesetzte Hydraulikpumpe beispielsweise langsamer und somit leiser arbeiten kann als bei der Erzeugung eines sollvorgabegeführten Bremsmoments.

Wenn im Zeitpunkt t₁ bei einer derart präparierten Bremse dann tatsächlich eine Bremsanforderung von einem Fahrer oder einem Assistenzsystem ergeht, kann ein das zu erzeugende Bremsmoment M bewirkender Bremsdruck p ausgehend von dem bereits erzeugten Präparierungsbremsdruck p₁, p₂ schnell stark erhöht werden. Eine Verzögerung des Fahrzeugs kann somit schneller und mit höherer Präzision bewirkt werden, als dies bei herkömmlichen Bremsvorrichtungen ohne die Erzeugung eines Präparierungsbremsmoments der Fall war.

In Figur 3 sind verschiedene Verläufe des Bremsdrucks in einer erfindungsgemäßen Bremsvorrichtung für eine Fallkonstellation dargestellt, bei der im Rahmen eines vorangehenden Bremsvorgangs bis zu einem Zeitpunkt tₑ an der Bremse bereits eine hohes Bremsmoment 29 erzeugt wurde, das dann durch Beenden der Bremsanforderung sukzessive abgebaut wird.

Beispielsweise kann bis zum Zeitpunkt tₑ von einem Abstandsregeltempomat ein Bremsvorgang gesteuert werden, der dann durch Betätigen des Gaspedals durch den Fahrer priorisiert abgebrochen wird, so dass der Bremsdruck p sukzessive reduziert wird.

Wenn zu einem Zeitpunkt t₀₁, zu dem der zuvor herrschende Bremsdruck noch nicht bis auf einen Minimalwert p₁, der einem Präparierungsbremsmoment entspricht, abgebaut wurde, von einer Fahrsituationserkennungseinrichtung erkannt wird, dass mit hoher Wahrscheinlichkeit bald wieder eine Bremsanforderung von dem Fahrer oder Assistenzsystem ergehen wird, kann ein Bremspräparierungssignal erzeugt werden. Aufgrund dieses Bremspräparierungssignals wird mithilfe der Bremspräparierungssteuerung bewirkt, dass der das vorangehend erzeugte sollvorgabegeführte Bremsmoment bewirkende Bremsdruck 29 lediglich minimal bis auf den das Präparierungsbremsmoment bewirkenden Bremsdruck p₁ abgesenkt wird. Beispielsweise durch Schließen eines zugehörigen Ventils bei einer Hydraulikbremsvorrichtung kann der Bremsdruck dann, der Kurve 25 folgend, auf diesem Präparierungsbremsdruck p₁ gehalten werden, bis zu einem Zeitpunkt t₁ die erwartete Bremsanforderung eintrifft, woraufhin der Bremsdruck sollvorgabegeführt stark erhöht wird.

Wenn alternativ eine Fahrsituationserkennungseinrichtung erst zu einem Zeitpunkt t₀₂, das heißt, nachdem der vorangehende sollvorgabegeführte Bremsdruck 29 unter einen minimal für ein Präparierungsbremsmoment notwendigen Druck p₁ abgesunken ist, erkennt, dass wahrscheinlich bald erneut eine Bremsanforderung ergehen wird, kann zwar der während des vorangehenden Bremsvorgangs aufgebaute Bremsdruck 29 nicht wie in der Kurve 25 genutzt werden, es kann aber, der Kurve 27 folgend, erneut ein Präparierungsbremsdruck p₁ langsam aufgebaut werden.

Eine Stärke des zu erzeugenden Präparierungsbremsmoments ist sinnvollerweise mindestens so hoch wie zur Erzeugung einer Bremsbereitschaft notwendig. Bei hydraulischen Bremssystemen kann dies dem Druckniveau einer bekannten Vorbefüllungsfunktion (Totvolumenkompensation) entsprechen. Dabei werden die Bremsbeläge der Bremse an die Bremsscheibe angelegt, ohne jedoch das Fahrzeug spürbar zu verzögern. Darüber hinaus können situativ höhere Präparierungsbremsmomente vorteilhaft sein, um eine Elastizität des Bremssystems beispielsweise weiter zu reduzieren oder gezielt eine leichte Verzögerung aufzuprägen, um einen erwarteten Bremseingriff im Rahmen einer von einem Fahrer oder einem Assistenzsystem bewirkten Bremsanforderung vorzubereiten.

Das zu erzeugende Präparierungsbremsmoment ist dabei als mindestens einzustellendes Bremsmoment zu verstehen, das beizubehalten beziehungsweise aufzubauen ist. Erfordert eine gleichzeitig laufende sollvorgabegeführte Längsregelung im Rahmen einer Bremsanforderung ein höheres Bremsmoment, so ist letzteres zu realisieren.

Das gewünschte Präparierungsbremsmoment wird vorzugsweise möglichst ruck- und geräuscharm erzeugt. Ein vorhandenes Bremsmoment aus einer vorangehenden sollvorgabegeführten Bremsung kann erhalten werden beziehungsweise gegebenenfalls auf das zu erhaltende Präparierungsbremsmoment abgebaut werden. Muss ein Bremsmoment erst aufgebaut werden, so kann dies vorzugsweise unter Berücksichtigung der spezifischen Eigenschaften der Bremsanlage möglichst unauffällig erfolgen. Im Fall eines Bremssystems mit hydraulischer Pumpe ist die Dynamik des Druckaufbaus vorzugsweise so zu realisieren, dass er bei niedriger Pumpendrehzahl und damit geringer Geräuschentwicklung erfolgen kann.

Ein nachfolgender Bremseingriff kann dann stetig von dem Niveau des Präparierungsbremsmoments unter Ausnutzung der verbesserten Eigenschaften der Bremsanlage wie beispielsweise einem geringeren Volumenbedarf durch eine geringere Elastizität bei einem Hydraulikbremssystem erfolgen.

Nachfolgend werden Beispiele für Implementierungen einer erfindungsgemäßen Bremsvorrichtung beziehungsweise eines Steuergeräts zum Durchführen eines Verfahrens zum Ansteuern einer solchen Bremsvorrichtung beschrieben.

Ein Abstandsregeltempomat ACC dient dazu, die Geschwindigkeit eines Kraftfahrzeugs gemäß einer Vorgabe kontinuierlich zu regeln, wobei bei der Regelung ein Abstand zu einem vorausfahrenden Fahrzeug als zusätzliche Rückführ- und Stellgröße einbezogen wird. Sobald der Abstandsregeltempomat erkennt, dass das eigene Fahrzeug dem vorausfahrenden Fahrzeug zu nahe kommt, wird eine Bremsanforderung an eine sollvorgabegeführte Verzögerungsregelung einer Bremsvorrichtung geleitet, um das eigene Fahrzeug abzubremsen und so zu verhindern, dass ein Mindestabstand zu einem vorausfahrenden Fahrzeug unterschritten wird.

Eine von einem Fahrer häufig genutzte Möglichkeit, den Anhalteabstand oder die letzte Phase des Anhaltevorgangs nach eigenen Wünschen zu beeinflussen, ist das zeitweise Übertreten des aktiven Abstandsregeltempomats mit dem Gaspedal. Da der Fahrerwunsch stets höchste Priorität hat, wird bei herkömmlichen Bremsvorrichtungen und ACC-Steuerungen in diesen Fällen ein eigentlich für die laufende Regelung erforderliches Bremsmoment vollständig abgebaut und eine dem Fahrerwunsch entsprechende Ansteuerung des Antriebs umgesetzt.

Eine Abbremsung des Fahrzeugs wird erst fortgeführt, nachdem der Fahrereingriff endet. Dabei muss ein hoher Gradient des Bremsdrucks beziehungsweise Bremsmoments umgesetzt werden, um die Verzögerungsanforderung des Abstandsregeltempomats zu erreichen. Da dieser Gradient bei drucklosem Bremssystem erzeugt werden muss, kann dies zu störenden Geräuschen im Bremssystem führen. Außerdem ist eine Reaktionszeit des Bremssystems unvermeidbar, bis die angeforderte Fahrzeugverzögerung wieder eingestellt ist. Um das Fahrzeug dennoch in einem erforderlichen Mindestabstand zum Stillstand zu bringen oder einen erforderlichen Mindestabstand hinter dem langsam vorausfahrenden Fahrzeug einzuhalten, muss der Regler im Abstandsregeltempomat die Fahrzeugverzögerung und / oder deren Ruck auf für den Fahrer unkomfortable Werte anheben.

Mit einer Ausführungsform der hierin vorgeschlagenen Bremsvorrichtung beziehungsweise des Verfahrens zum Ansteuern dieser Bremsvorrichtung kann ein Algorithmus in dem Abstandsregeltempomat bereit gestellt werden, der es ermöglicht, Bremssystemgeräusche und unkomfortable Fahrzeugverzögerungen nach einem Übertreten des Fahrers zu reduzieren beziehungsweise zu verhindern.

Wenn eine in einem solchen System implementierte Fahrsituationserkennungseinrichtung erkennt, dass mit hoher Wahrscheinlichkeit in naher Zukunft erneut eine Bremsanforderung an die sollvorgabegeführte Verzögerungsregelung abgegeben wird, wird ein Bremspräparierungssignal erzeugt. Aufgrund dieses Bremspräparierungssignals bewirkt eine in der Bremsvorrichtung enthaltene Bremspräparierungssteuerung, dass ein von einem vorangehenden Bremsvorgang vorliegendes Bremsmoment beziehungsweise ein Restbremsdruck nicht vollständig abgebaut wird beziehungsweise ein Bremsmoment beziehungsweise ein Bremsdruck zum Beispiel über eine Vorbefüllungsfunktion des Bremssystems neu aufgebaut wird. Dadurch wird die Bremsvorrichtung auf eine bevorstehende Weiterführung der sollvorgabegeführten Verzögerungsregelung und eine zu erwartende Abbremsung vorbereitet.

Nach einem Übertreten des Fahrers kann so ein Druckaufbaugeräusch reduziert, ein Abbremskomfort verbessert und die Präzision der Regelung erhöht werden.

Das Bremspräparierungssignal kann im einfachsten Fall ein einfaches binäres Signal sein. Alternativ kann eine variable Größe als Bremspräparierungssignal übermittelt werden, die abhängig von einer vorliegenden Fahrsituation eine Empfehlung für die Stärke des beibehaltenen beziehungsweise des neu zu erzeugenden Präparierungsbremsmoments darstellen kann.

Es kann vorgesehen werden, dass das Bremspräparierungssignal nur in einem einstellbaren Geschwindigkeitsbereich erzeugt werden kann, in dem Probleme mit Geräuschen, Vibrationen und/oder Rauigkeit (manchmal auch als NVH, Noise/Vibration/Harshness bezeichnet) oder Komfort zu erwarten sind.

Das Bremspräparierungssignal sollte von dem Abstandsregeltempomaten nur gesendet werden, wenn beispielsweise die durch vorhandene Umweltsensoren erfasste Fahrsituation eine Abbremsung nach beispielsweise einem Übertreten des Fahrers erwarten lässt. In anderen Fällen würde die Erzeugung eines Präparierungsbremsmoments zu einer nicht akzeptablen Verschlechterung der Funktion des Abstandsregeltempomats führen.

Um diejenigen Fahrsituationen bestimmen zu können, in denen eine Anforderung eines Präparierungsbremsmoments, das heißt einer Erzeugung eines Bremspräparierungssignals, erfolgen soll, sollten folgende Größen berücksichtigt werden: (a) Fahrzeuggeschwindigkeit beziehungsweise Fahrzeugbeschleunigung; (b) Abstand zum vorausfahrenden Fahrzeug; (c) Geschwindigkeit beziehungsweise Beschleunigung des vorausfahrenden Fahrzeugs; und (d) Gaspedalbetätigung durch den Fahrer. Hierdurch kann beispielsweise erkannt werden, wenn das vorausfahrende Fahrzeug beschleunigt und ein Bremsmoment für eine Weiterführung der Abstandsregeltempomat-Regelung ungünstig ist. In solchen Fällen sollte kein Bremspräparierungssignal erzeugt werden beziehungsweise ein solches zurückgesetzt werden.

Je nach dem, welche Sensoren in einem Abstandsregeltempomaten verfügbar sind, können weitere Signale zur Beurteilung der Fahrsituation beziehungsweise einer erforderlichen Folgebremsung verwendet werden, wie beispielsweise ein Signal, das eine Information über eine seitliche Position des vorausfahrenden Fahrzeugs zum eigenen Fahrzeug, einen Lenkwinkel des eigenen Fahrzeugs und / oder eine Umfeldsituation wie beispielsweise eine Ampel oder weiter vorausfahrende Fahrzeuge und deren Bewegung, angibt.

In einer konkreten Beispielsituation wird bei einer von einem Abstandsregeltempomaten gesteuerten Fahrt mit hoher Geschwindigkeit ein Objekt erkannt, das mit hoher Wahrscheinlichkeit als langsameres vorausfahrendes Fahrzeug oder Hindernis eingeordnet werden kann, jedoch noch nicht ausreichend sicher, um sofort eine starke Fahrzeugverzögerung einzuleiten, da dies die Gefahr einer Fehlaktivierung mit sich bringen würde. Je nach Sicherheit der Situationserkennung und / oder Grad der Kritikalität, beispielsweise abzuschätzen aufgrund der Geschwindigkeitsdifferenz zwischen dem eigenen und dem vorausfahrenden Fahrzeug, kann ein angepasstes Präparierungsbremsmoment realisiert werden, das leicht verzögernd auf das Fahrzeug wirkt und die Bremse des Fahrzeugs in erhöhte Bremsbereitschaft versetzt, ohne schon einen Zielwert für eine Längsregelung im Rahmen einer sollvorgabegeführten Verzögerungsregelung vorzugeben. Eine nachfolgende Verzögerungsregelung kann dann bei Bedarf mit geringer Verzugszeit und hoher Dynamik realisiert werden.

Eine weitere Anwendungsmöglichkeit von Ausführungsformen der hierin vorgeschlagenen Bremsvorrichtung beziehungsweise Verfahren zu deren Ansteuerung besteht bei so genannten Predictive-Safety-Systemen. Autonomen Teil- und Notbremseingriffen geht häufig ein Bremseingriff durch den Fahrer oder andere autonome Funktionen voraus. Wird dieser abgebrochen, so wird die Bremse bei herkömmlichen Systemen zunächst vollständig gelöst oder nur in Bereitschaft gehalten, das heißt bei minimaler Vorbefüllung, unabhängig von einem bereits erkennbaren Grad der Kritikalität der Situation und einer Wahrscheinlichkeit eines zu erwartenden Notbremseingriffes. Erst beim Auslösen der Notbremsung beginnt dann eine Ansteuerung der Bremsanlage, wobei sich das Fahrzeug zu Beginn im frei rollenden Zustand befindet, lediglich minimal verzögert durch Schleppmomente. Im Falle einer hydraulischen Bremsanlage ist die Dynamik des Verzögerungsaufbaus umso geringer, je weniger Bremsdruck bereits im Bremssystem vorhanden ist, was auf den Elastizitätsverlauf hydraulischer Bremsanlagen zurückzuführen ist. In einem Anfangszustand einer vollständig gelösten Bremse ist der Zeitverlust zu Beginn eines Bremsvorgangs daher besonders groß, was die Wirksamkeit einer Notbremsfunktion einschränkt.

Bei der hier vorgestellten Bremsvorrichtung kann bereits vor dem eigentlichen Anfordern der Notbremsung ein Präparierungsbremsmoment durch geeignetes Ansteuern der Bremse erzeugt werden, so dass sobald die Notbremsanforderung tatsächlich eintrifft, das Bremsmoment ohne Verzögerung aufgebaut werden kann. Die Tatsache, dass ein solches Präparierungsbremsmoment eine signifikante und eventuell für den Fahrer wahrnehmbare Vorverzögerung des Kraftfahrzeugs bewirkt, kann insbesondere für den Fall, dass das Präparierungsbremsmoment eine Verbesserung der Fahrsicherheit des Fahrzeugs mit sich bringt, toleriert werden.

Als abschließendes Beispiel für Einsatzmöglichkeiten von Ausführungsformen der hierin vorgeschlagenen Bremsvorrichtung beziehungsweise deren Ansteuerung wird ein autonomes Anhalten am Berg im Rahmen einer ACC-Folgefahrt beschrieben. Hierzu ist ein steigungsabhängiges Bremsmoment notwendig, das möglichst schnell und idealerweise am Umkehrpunkt einer Fahrzeugbewegung aufgebaut werden sollte. Falls eine solche Situation beispielsweise aufgrund der Steigung, Geschwindigkeit und / oder Beschleunigung erkannt wird, kann die beschriebene Bremspräparierung angefordert werden, um eventuell vorhandenes Bremsmoment zu behalten beziehungsweise ein Präparierungsbremsmoment aufzubauen. Das zum Halten des Fahrzeugs erforderliche Bremsmoment kann dann schneller und gegebenenfalls mit weniger Geräusch aufgebaut werden.

## Patentansprüche

1. Bremsvorrichtung (3) für ein Kraftfahrzeug (1), aufweisend:
eine sollvorgabegeführte Verzögerungseinrichtung (13), welche bei Empfang einer von einem Fahrer oder einem Assistenzsystem bewirkten Bremsanforderung basierend auf einer Differenz zwischen einem Sollwert und einem Istwert oder basierend lediglich auf einem vorgegebenen Sollwert eine Bremse (5) dazu ansteuert, ein sollvorgabegeführtes Bremsmoment für eine sollwertorientierte Verzögerung des Kraftfahrzeugs zu bewirken; wobei die Bremsvorrichtung ferner einer Bremspräparierungssteuerung (15) aufweist, welche bei Empfang eines Bremspräparierungssignals die Bremse (5) unabhängig von dem Sollwert dazu ansteuert, mindestens ein Präparierungsbremsmoment für eine signifikante Vorverzögerung des Kraftfahrzeugs zu bewirken, **dadurch gekennzeichnet, dass**
die Bremspräparierungssteuerung bei Empfang des Bremspräparierungssignals und bei Vorliegen einer vorangehenden Erzeugung eines sollvorgabegeführten Bremsmoments die Bremse dazu ansteuert, das vorangehend erzeugte sollvorgabegeführte Bremsmoment bis minimal auf das Präparierungsbremsmoment abzusenken.

2. Bremsvorrichtung nach Anspruch 1, wobei die signifikante Vorverzögerung des Kraftfahrzeugs mindestens 0,1 m/s² beträgt.

3. Bremsvorrichtung nach Anspruch 1 oder 2, wobei die Bremspräparierungssteuerung die Bremse dazu ansteuert, die Erzeugung des Präparierungsbremsmoment mit einer im Vergleich zu einer Erzeugung eines sollvorgabegeführten Bremsmoment verringerten Geräuschentwicklung durchzuführen.

4. Bremsvorrichtung nach einem der Ansprüche 1 bis 3, wobei die Bremspräparierungssteuerung bei Empfang des Bremspräparierungssignals und ohne Vorliegen einer vorangehenden Erzeugung eines sollvorgabegeführten Bremsmoments die Bremse dazu ansteuert, das von der Bremse bewirkte Bremsmoment bis auf das Präparierungsbremsmoment zu steigern.

5. Bremsvorrichtung nach einem der Ansprüche 1 bis 4, wobei die Bremspräparierungssteuerung dazu ausgelegt ist, verschiedene Arten von Bremspräparierungssignalen zu empfangen und abhängig von dem empfangenen Bremspräparierungssignal die Bremse dazu ansteuert, ein Bremspräparierungssignal-spezifisches Präparierungsbremsmoment für eine signifikante Vorverzögerung des Kraftfahrzeugs zu bewirken.

6. Verfahren zum Ansteuern einer Bremsvorrichtung gemäß einem der Ansprüche 1 bis 5, wobei das Verfahren die folgenden Schritte aufweist:
Erzeugen eines Bremspräparierungssignals, sobald eine Fahrsituation ermittelt wird, die eine baldige von einem Fahrer oder einem Assistenzsystem bewirkte Bremsanforderung mit hoher Wahrscheinlichkeit erwarten lässt, und
Übermitteln des Bremspräparierungssignals an die Bremspräparierungssteuerung der Bremsvorrichtung, **dadurch gekennzeichnet, dass** die Bremspräparierungssteuerung bei Empfang des Bremspräparierungssignals und bei Vorliegen einer vorangehenden Erzeugung eines sollvorgabegeführten Bremsmoments die Bremse dazu ansteuert, das vorangehend erzeugte sollvorgabegeführte Bremsmoment bis minimal auf das Präparierungsbremsmoment abzusenken.

7. Verfahren nach Anspruch 6, wobei verschiedene Arten von Bremspräparierungssignalen erzeugt werden abhängig von einer Wahrscheinlichkeit einer baldig von einem Fahrer oder einem Assistenzsystem bewirkten Bremsanforderung und/oder einer Kritikalität einer aktuellen Fahrsituation.

8. Verfahren nach Anspruch 6 oder 7, wobei bei der Ermittlung der Fahrsituation eine Geschwindigkeit oder Beschleunigung des Kraftfahrzeugs, ein Abstand zu einem vorausfahrenden Fahrzeug, eine Geschwindigkeit oder Beschleunigung des vorausfahrenden Fahrzeugs und eine Gaspedalbetätigung eines Fahrers berücksichtigt werden.

9. Verfahren nach Anspruch 8, wobei bei der Ermittlung der Fahrsituation ergänzend eine seitliche Position des vorausfahrenden Fahrzeugs in Bezug zu dem Kraftfahrzeug, ein Lenkwinkel des Kraftfahrzeugs und/oder Umfeldsituationen berücksichtigt werden.

10. Steuergerät (17) für ein Kraftfahrzeug (1), wobei das Steuergerät (17) dazu ausgelegt ist, ein Verfahren gemäß einem der Ansprüche 6 bis 9 durchzuführen.

11. Kraftfahrzeug (1) mit einer Bremsvorrichtung (3) gemäß einem der Ansprüche 1 bis 5 und / oder einem Steuergerät gemäß Anspruch 10.

## Claims

1. Brake device (3) for a motor vehicle (1), comprising:
a setpoint-specification-controlled deceleration device (13) which, when a braking request which is brought about by a driver or an assistance system is received actuates a brake (5) on the basis of a difference between a setpoint value and an actual value or on the basis merely of a predefined setpoint value, to bring about a setpoint-specification-controlled braking torque for a setpoint-value-oriented deceleration of the motor vehicle;
wherein the brake device also has a braking-preparation-controller (15) which, when a braking-preparation signal is received actuates the brake (5) independently of the setpoint value, to bring about at least a preparation-braking torque for a significant pre-deceleration of the motor vehicle,
**characterized in that**
when the braking-preparation signal is received and when a preceding generation of a setpoint-specification-controlled braking torque has occurred the braking-preparation controller actuates the brake to lower the setpoint-specification-controlled braking torque, which has been previously generated, to at minimum the preparation-braking torque.

2. Brake device according to Claim 1, wherein the significant pre-deceleration of the motor vehicle is at least 0.1 m/s².

3. Brake device according to Claim 1 or 2, wherein the braking-preparation controller actuates the brake to carry out the generation of the preparation-braking torque with noise generation which is reduced in comparison with generation of a setpoint-specification-controlled braking torque.

4. Brake device according to one of Claims 1 to 3, wherein, when the braking-preparation signal is received and a preceding generation of a setpoint-specification-controlled braking torque has not occurred, the braking-preparation controller actuates the brake to increase the braking torque brought about by the brake to the preparation-braking torque.

5. Brake device according to one of Claims 1 to 4, wherein the braking-preparation controller is configured to receive different types of braking-preparation signals and actuates the brake as a function of the received braking-preparation signal to bring about a braking-preparation-specific preparation-braking torque for significant pre-deceleration of the motor vehicle.

6. Method for actuating a brake device according to one of Claims 1 to 5, wherein
the method has the following steps:
generating a braking-preparation signal as soon as a driving situation is determined which permits a prompt braking request, brought about by a driver or an assistance system, to be expected with a high probability,
and
transmitting the braking-preparation signal to the braking-preparation controller of the brake device, **characterized in that**
when the braking-preparation signal is received and when a preceding generation of a setpoint-specification-controlled braking torque has occurred, the braking-preparation controller actuates the brake to lower the setpoint-specification-controlled braking torque, which has been previously generated, to at minimum the preparation-braking torque.

7. Method according to Claim 6, wherein various types of braking-preparation signals are generated as a function of a probability of a prompt braking request, brought about by a driver or an assistance system, and/or a critical rating of a current driving situation.

8. Method according to Claim 6 or 7, wherein when the driving situation is determined, a speed or acceleration of the motor vehicle, a distance from a vehicle travelling ahead, a speed or acceleration of the vehicle travelling ahead and an activation of the accelerator by a driver are taken into account.

9. Method according to Claim 8, wherein when the driving situation is determined, a lateral position of the vehicle travelling ahead with respect to the motor vehicle, a steering angle of the motor vehicle and/or situations in the surroundings are additionally taken into account.

10. Control unit (17) for a motor vehicle (1), wherein the control unit (17) is configured to carry out a method according to one of Claims 6 to 9.

11. Motor vehicle (1) having a brake device (3) according to one of Claims 1 to 5 and/or a control unit according to Claim 10.

## Revendications

1. Dispositif de freinage (3) destiné à un véhicule automobile (1), comportant :
un organe de ralentissement (13) répondant à des valeurs de consigne qui, lors de la réception d'une demande de freinage déclenchée par un conducteur ou par un système d'assistance sur la base d'une différence entre une valeur de consigne et une valeur réelle ou
sur la base uniquement d'une valeur de consigne prédéterminée, commande un frein (5) de manière à ce que ce dernier exerce un couple de freinage répondant aux valeurs de consigne, pour ainsi ralentir le véhicule automobile d'une manière orientée par les valeurs de consigne ;
dans lequel le dispositif de freinage comporte en outre un module de commande de préparation au freinage (15) qui, lors de la réception d'un signal de préparation au freinage, commande le frein (5) indépendamment de la valeur de consigne de manière à ce que ce dernier exerce au moins un couple de préparation au freinage pour un ralentissement préalable significatif du véhicule automobile,
**caractérisé en ce que** le module de commande de préparation au freinage, lors de la réception du signal de préparation au freinage et lors de la présence d'un couple de freinage répondant aux valeurs de consigne préalablement produit, commande le frein de manière à réduire le couple de freinage répondant aux valeurs de consigne préalablement produit jusqu'à une valeur minimale égale au couple de freinage de préparation.

2. Dispositif de freinage selon la revendication 1, dans lequel le ralentissement préalable significatif du véhicule automobile est d'au moins 0,1 m/s².

3. Dispositif de freinage selon la revendication 1 ou 2, dans lequel le module de commande de préparation au freinage commande le frein de manière à effectuer la production du couple de freinage de préparation en produisant un bruit réduit par comparaison à la production d'un couple de freinage répondant aux valeurs de consigne.

4. Dispositif de freinage selon l'une des revendications 1 à 3, dans lequel le module de commande de préparation au freinage, lors de la réception du signal de préparation au freinage et en l'absence de production préalable d'un couple de freinage répondant aux valeurs de consigne, commande le frein de manière à ce que le couple de freinage exercé par le frein augmente jusqu'au couple de freinage de préparation.

5. Dispositif de freinage selon l'une des revendications 1 à 4, dans lequel le module de préparation au freinage est conçu pour recevoir différents types de signaux de préparation au freinage et commande le frein en fonction du signal de préparation au freinage reçu de manière à exercer un couple de freinage de préparation spécifique du signal de préparation au freinage pour un ralentissement préalable significatif du véhicule automobile.

6. Procédé de commande d'un dispositif de freinage selon l'une des revendications 1 à 5, dans lequel le procédé comprend les étapes consistant à :
générer un signal de préparation au freinage dès qu'une situation de conduite dans laquelle il paraît très probable qu'un conducteur ou qu'un système d'assistance va bientôt déclencher une demande de freinage, et
transmettre le signal de préparation au freinage au module de commande de préparation au freinage du dispositif de freinage,
**caractérisé en ce que** le module de commande de préparation au freinage, lors de la réception du signal de préparation au freinage et en présence d'un couple de freinage répondant aux valeurs de consigne préalablement produit, commande le frein de manière à réduire le couple de freinage répondant aux valeurs de consigne préalablement produit jusqu'à une valeur minimale égale au couple de freinage de préparation.

7. Procédé selon la revendication 6, dans lequel différents types de signaux de préparation au freinage sont générés en fonction d'une probabilité qu'un conducteur ou qu'un système d'assistance va bientôt déclencher une demande de freinage et/ou d'un caractère critique d'une situation de conduite actuelle.

8. Procédé selon la revendication 6 ou 7, dans lequel, lors de la détermination de la situation de conduite, une vitesse ou une accélération du véhicule automobile, une distance par rapport à un véhicule précédent, une vitesse ou une accélération du véhicule précédent ou un actionnement de la pédale d'accélérateur par un conducteur sont pris en compte.

9. Procédé selon la revendication 8, dans lequel, lors de la détermination de la situation de conduite, une position latérale du véhicule précédent par rapport au véhicule automobile, un angle de braquage du véhicule automobile et/ou des situations environnementales sont également pris en compte.

10. Appareil de commande (17) destiné à un véhicule automobile (1), dans lequel l'appareil de commande (17) est conçu pour mettre en oeuvre un procédé selon l'une des revendications 6 à 9.

11. Véhicule automobile (1) comportant un dispositif de freinage (3) selon l'une des revendications 1 à 5 et/ou un appareil de commande selon la revendication 10.
